# EUROPEAN PATENT SPECIFICATION

(11) **EP 4 529 042 B1**
(45) Date of publication and mention of the grant of the patent: **02.09.2026**
(21) Application number: 23822932.2
(22) Date of filing: 31.05.2023
(51) Int. Cl.: H04B 7/185, H04L 45/74

(54) **INTER-SATELLITE LINK CONSTRUCTION METHOD AND COMMUNICATION APPARATUS**
VERFAHREN ZUR HERSTELLUNG EINER VERBINDUNG ZWISCHEN SATELLITEN UND KOMMUNIKATIONSVORRICHTUNG
PROCÉDÉ DE CONSTRUCTION DE LIAISON INTER-SATELLITE ET APPAREIL DE COMMUNICATION

(30) Priority: 14.06.2022 CN 202210673153
(43) Date of publication of application: 26.03.2025
(60) Divisional application: 26194424.3
(73) Proprietor: Huawei Technologies Co., Ltd., Shenzhen, Guangdong 518129 (CN)
(72) Inventor: MENG, Xian, Shenzhen, Guangdong 518129 (CN); LUO, Hejia, Shenzhen, Guangdong 518129 (CN)
(74) Representative: Körber, Martin Hans
(86) International application number: PCT/CN2023/097570
(87) International publication number: WO 2023/241362

(56) References cited:
- CN-A- 111 294 108
- CN-A- 111 953 399
- CN-A- 111 953 399
- CN-B- 108 881 029
- FR-A1- 2 818 055
- US-B1- 6 249 513
- US-B1- 6 249 513

## Description

### TECHNICAL FIELD

Embodiments of this application relate to the field of communication technologies, and in particular, to an inter-satellite link construction method and a communication apparatus.

### BACKGROUND

Currently, 5th generation (5th generation, 5G) new radio (new radio, NR) has entered a commercial deployment phase from a standardization phase. An NR standard is researched and designed for a characteristic of terrestrial communication, and has characteristics of providing high-rate, high-reliability, and low-latency communication for a user terminal. Compared with terrestrial communication, non-terrestrial network (non-terrestrial network, NTN) communication has characteristics such as large coverage and flexible networking. Currently, research institutes, communication organizations, companies, and the like have participated in researching NTN communication technologies and standards, aiming to build an integrated communication network for space-air-ground communication.

In NTN communication, a large quantity of satellites may be deployed in space, and the large quantity of satellites may form a constellation. A large-scale communication satellite constellation is usually designed by using a Walker (Walker) constellation. A constellation consists of several satellites distributed on one or more orbital planes as required. All satellites in a same constellation use circular orbits having a same altitude and a same inclination angle. Orbital planes are evenly distributed along the equator, and the satellites are evenly distributed on the orbits. There is a specific relationship between phases of satellites in different orbital planes. Generally, each satellite may establish an inter-satellite link to a front satellite and a rear satellite on an orbital plane, and may further establish an inter-satellite link to a satellite on an adjacent orbital plane.

However, when orbits of different satellites in a satellite constellation are discrete and are not on a same orbit, the foregoing manner of establishing an inter-satellite link by using the Walker constellation is no longer applicable.

CN 111 953 399 A discloses an inter-satellite routing method in a low-orbit satellite communication network, which is a dynamic inter-satellite network routing method based on heartbeat packet technology.

CN 108 881 029 B discloses a low-orbit satellite network addressing and routing method and system based on satellite-ground decoupling.

### SUMMARY

This application provides an inter-satellite link construction method and a communication apparatus, to establish an inter-satellite link in a satellite constellation with discrete orbits. The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, this application provides an inter-satellite link construction method. The method may be performed by a satellite. The satellite may be a geostationary satellite, a non-geostationary satellite, an artificial satellite, a low earth orbit satellite, a medium earth orbit satellite, a high earth orbit satellite, or the like. This is not specifically limited herein in this application.

The method includes: A first satellite receives an inter-satellite link creation message of a second satellite, where the inter-satellite link creation message includes at least one of the following: an address of the second satellite and a satellite number of the second satellite, and the address of the second satellite is determined based on a projection location of the second satellite on a second ground projected track; and if the second satellite and the first satellite satisfy an inter-satellite link matching rule, the first satellite creates an inter-satellite link between the first satellite and the second satellite, where the inter-satellite link matching rule is determined based on at least one of the following parameters: the address of the second satellite and the satellite number of the second satellite.

In this application, when satellites are constructed into an inter-satellite link, the construction of the inter-satellite link is determined based on an address of the satellite or a satellite number of the satellite, and is irrelevant to an orbit on which the satellite is located. The inter-satellite link constructed in this manner can adapt to a requirement of a satellite constellation with discrete orbits.

In a possible manner, the inter-satellite link matching rule includes at least one of the following: the address of the second satellite and an address of the first satellite satisfy a satellite address difference, the satellite number of the second satellite and a satellite number of the first satellite satisfy a satellite number difference, and there is a mapping relationship between a track segment in which the second satellite is located and a track segment in which the first satellite is located; and the address of the first satellite is determined based on a projection location of the first satellite on a first ground projected track.

In this application, an inter-satellite link matching rule may be determined based on the address of the satellite and the number of the satellite, and depending on whether there is a mapping relationship between tracks in which the satellites are located. In this manner, it can be ensured that the satellite can establish an appropriate inter-satellite link, to ensure efficiency of constructing an inter-satellite link between ground co-track satellites.

In a possible manner, the inter-satellite link matching rule is included in the creation message, or is not included in the creation message, but may be transmitted together with the creation message.

In a possible manner, the inter-satellite link matching rule is pre-stored in the first satellite. This manner can reduce signaling overheads.

In a possible manner, the creation message further includes an identifier of the ground projected track of the second satellite.

In this application, the creation message further includes the identifier of the ground projected track of the second satellite, so that the first satellite can simply determine, based on the identifier of the ground projected track of the second satellite, whether the second satellite can construct the inter-satellite link to the first satellite.

In a possible manner, the address of the second satellite is alternatively determined based on the identifier of the second ground projected track.

In this application, the address of the second satellite is determined based on the identifier of the ground projected track of the second satellite, and satellite addressing is performed based on the identifier of the ground projected track of the second satellite, to more quickly construct the inter-satellite link.

In a possible manner, when the first satellite and the second satellite belong to a same ground co-track satellite chain, a condition that satisfies the satellite address difference includes: the address of the first satellite and the address of the second satellite are less than a first address threshold.

In a possible manner, when the first satellite and the second satellite belong to a same ground co-track satellite chain, and the first satellite and the second satellite belong to adjacent track circles, a condition that satisfies the satellite address difference includes: a distance between the first satellite and the second satellite is less than a first distance threshold, or a distance between the first satellite and the second satellite is less than a first latitude threshold.

In a possible manner, when the first satellite and the second satellite belong to a same ground co-track satellite chain, a condition that satisfies the satellite number difference includes: the satellite number of the first satellite and the satellite number of the second satellite are less than a first number threshold, where
the ground co-track satellite chain includes a plurality of satellites that have a same ground projected track; and the track circle is a track segment that is of the ground projected track of the ground co-track satellite chain and that traverses a reference line twice in a same direction, and latitude of the reference line is fixed.

In a possible manner, when the first satellite and the second satellite belong to a same ground co-track satellite chain, and the first satellite and the second satellite belong to adjacent track circles, a condition that satisfies the satellite number difference includes: a distance between the first satellite and the second satellite is less than a second distance threshold, or a distance between the first satellite and the second satellite is less than a second latitude threshold.

In this application, when it is determined that the first satellite and the second satellite are ground co-track satellites, the inter-satellite link is constructed based on a distance difference, a latitude difference, an address difference, and the like, to ensure the efficiency of constructing the inter-satellite link between the ground co-track satellites.

In a possible manner, when the first satellite and the second satellite belong to similar ground co-track satellite chains, and the first satellite and the second satellite belong to closest track circles, a condition that satisfies the satellite address difference includes: a distance between the first satellite and the second satellite is less than a third distance threshold, or a distance between the first satellite and the second satellite is less than a third latitude threshold, where
satellites in the similar ground co-track satellite chains have a same orbital altitude and a same orbital inclination angle, and have only a longitude offset between ground projected tracks.

In a possible manner, when the first satellite and the second satellite belong to similar ground co-track satellite chains, and the first satellite and the second satellite belong to closest track circles, a condition that satisfies the satellite number difference includes: a distance between the first satellite and the second satellite is less than a fourth distance threshold, or a distance between the first satellite and the second satellite is less than a fourth latitude threshold.

In this application, when it is determined that the first satellite and the second satellite are similar ground co-track satellites, the inter-satellite link is constructed based on a distance difference, a latitude difference, an address difference, and the like, to ensure the efficiency of constructing the inter-satellite link between the ground co-track satellites.

In a possible manner, the mapping relationship indicates that an identifier of a first track segment in which the first satellite is located corresponds to an identifier of a second track segment in which the second satellite is located.

In this application, the inter-satellite link is constructed depending on whether there is a mapping relationship between the track segments in which the first satellite and the second satellite are located, to ensure the efficiency of constructing the inter-satellite link between the ground co-track satellites. This manner is applicable to any one of the following cases: the first satellite and the second satellite belong to a same ground co-track satellite chain; the first satellite and the second satellite belong to similar ground co-track satellite chains; or the first satellite and the second satellite belong to different ground co-track satellite chains, and the first satellite and the second satellite do not belong to similar ground co-track satellite chains.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment; and the address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

In this application, the address of the satellite is indicated by using a track point or a track segment on a ground projected track of the satellite, so that a property that satellites in a ground co-track satellite chain have a same ground projected track can be fully used. During routing and addressing, routing and addressing complexity is reduced, and routing and addressing efficiency is improved.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

It should be noted that the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. The track point may be indicated in a plurality of different manners by using the foregoing parameters.

In a possible manner, the first satellite establishes an inter-satellite link between the first satellite and another satellite, where the establishing an inter-satellite link between the first satellite and another satellite includes at least one of the following trigger conditions:
the inter-satellite link between the first satellite and the second satellite is faulty, a satellite address difference between the first satellite and the second satellite exceeds a value of the satellite address difference, a satellite number difference between the first satellite and the second satellite exceeds a value of the satellite number difference, and there is no mapping relationship between the track segment in which the second satellite is located and the track segment in which the first satellite is located.

In this application, when the inter-satellite link between the first satellite and the second satellite is faulty, constructing the inter-satellite link between the first satellite and the another satellite can ensure that a new inter-satellite link is quickly constructed, to ensure data transmission.

In a possible manner, the first satellite re-establishes an inter-satellite link between the first satellite and the second satellite, where the re-establishing an inter-satellite link between the first satellite and the second satellite includes at least one of the following trigger conditions:
a value of the satellite address difference is changed, a value of the satellite number difference is changed, or the mapping relationship between the track segment in which the second satellite is located and the track segment in which the first satellite is located is changed.

In this application, when the inter-satellite link matching rule is changed, the inter-satellite link between the first satellite and the second satellite is reconstructed, to ensure the data transmission.

According to a second aspect, this application provides an inter-satellite link construction method. The method may be performed by a satellite. The satellite may be a geostationary satellite, a non-geostationary satellite, an artificial satellite, a low earth orbit satellite, a medium earth orbit satellite, a high earth orbit satellite, or the like. This is not specifically limited herein in this application.

The method includes: A second satellite determines an inter-satellite link creation message, and sends the inter-satellite link creation message to a first satellite, where the inter-satellite link creation message includes at least one of the following: an address of the second satellite and a satellite number of the second satellite, and the address of the second satellite is determined based on a projection location of the second satellite on a second ground projected track; and an inter-satellite link matching rule is determined based on at least one of the following parameters: the address of the second satellite and the satellite number of the second satellite.

In a possible manner, the inter-satellite link matching rule includes at least one of the following: the address of the second satellite and an address of the first satellite satisfy a satellite address difference, the satellite number of the second satellite and a satellite number of the first satellite satisfy a satellite number difference, and there is a mapping relationship between a track segment in which the second satellite is located and a track segment in which the first satellite is located; and the address of the first satellite is determined based on a projection location of the first satellite on a first ground projected track.

In a possible manner, the inter-satellite link matching rule is included in the creation message, or is not included in the creation message, but may be transmitted together with the creation message.

In a possible manner, the inter-satellite link matching rule is pre-stored in the first satellite.

In a possible manner, the creation message further includes an identifier of a ground projected track of the second satellite.

In a possible manner, the address of the second satellite is alternatively determined based on the identifier of the second ground projected track.

In a possible manner, when the first satellite and the second satellite belong to a same ground co-track satellite chain, a condition that satisfies the satellite address difference includes: the address of the first satellite and the address of the second satellite are less than a first address threshold.

In a possible manner, when the first satellite and the second satellite belong to a same ground co-track satellite chain, and the first satellite and the second satellite belong to adjacent track circles, a condition that satisfies the satellite address difference includes: a distance between the first satellite and the second satellite is less than a first distance threshold, or a distance between the first satellite and the second satellite is less than a first latitude threshold, where
the ground co-track satellite chain includes a plurality of satellites that have a same ground projected track; and the track circle is a track segment that is of the ground projected track of the ground co-track satellite chain and that traverses a reference line twice in a same direction, and latitude of the reference line is fixed.

In a possible manner, when the first satellite and the second satellite belong to a same ground co-track satellite chain, a condition that satisfies the satellite number difference includes: the satellite number of the first satellite and the satellite number of the second satellite are less than a first number threshold, where the ground co-track satellite chain includes a plurality of satellites that have a same ground projected track.

In a possible manner, when the first satellite and the second satellite belong to a same ground co-track satellite chain, and the first satellite and the second satellite belong to adjacent track circles, a condition that satisfies the satellite number difference includes: a distance between the first satellite and the second satellite is less than a second distance threshold, or a distance between the first satellite and the second satellite is less than a second latitude threshold.

In a possible manner, when the first satellite and the second satellite belong to similar ground co-track satellite chains, and the first satellite and the second satellite belong to closest track circles, a condition that satisfies the satellite address difference includes: a distance between the first satellite and the second satellite is less than a third distance threshold, or a distance between the first satellite and the second satellite is less than a third latitude threshold; or when the first satellite and the second satellite belong to similar ground co-track satellite chains, and the first satellite and the second satellite belong to closest track circles, a condition that satisfies the satellite number difference includes: a distance between the first satellite and the second satellite is less than a fourth distance threshold, or a distance between the first satellite and the second satellite is less than a fourth latitude threshold, where satellites in the similar ground co-track satellite chains have a same orbital altitude and a same orbital inclination angle, and have only a longitude offset between ground projected tracks.

In a possible manner, the mapping relationship indicates that an identifier of a first track segment in which the first satellite is located corresponds to an identifier of a second track segment in which the second satellite is located.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment; and the address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

According to a third aspect, an embodiment of this application provides a communication apparatus. The communication apparatus may be a first satellite (for example, the first satellite in the first aspect) or a chip disposed in the first satellite. The communication apparatus may be a second satellite (for example, the second satellite in the second aspect) or a chip disposed in the second satellite. The communication apparatus has a function of implementing the first aspect. For example, the communication apparatus includes corresponding modules, units, or means (means) for performing the steps in the first aspect or the second aspect. The function, unit, or means may be implemented by using software, implemented by using hardware, or implemented by hardware executing corresponding software.

In a possible design, the communication apparatus is configured to implement the method in any possible design of the first aspect. The communication apparatus includes a processing unit and a transceiver unit. The transceiver unit may be configured to send and receive a signal, to implement communication between the communication apparatus and another apparatus. For example, the transceiver unit is configured to receive an inter-satellite link creation message of a second satellite; and the processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In a possible design, the transceiver unit is configured to receive an inter-satellite link creation message of a second satellite, where the inter-satellite link creation message includes at least one of the following: an address of the second satellite and a satellite number of the second satellite, and the address of the second satellite is determined based on a projection location of the second satellite on a second ground projected track; and the processing unit is configured to: if the second satellite and the first satellite satisfy an inter-satellite link matching rule, the first satellite creates an inter-satellite link between the first satellite and the second satellite, where the inter-satellite link matching rule is determined based on at least one of the following parameters: the address of the second satellite and the satellite number of the second satellite.

In another possible design, the communication apparatus is configured to implement the method in any possible design of the second aspect, and the processing unit is configured to determine an inter-satellite link creation message; and the transceiver unit is configured to send the inter-satellite link creation message to a first satellite, where the inter-satellite link creation message includes at least one of the following: an address of the second satellite and a satellite number of the second satellite, and the address of the second satellite is determined based on a projection location of the second satellite on a second ground projected track; and an inter-satellite link matching rule is determined based on at least one of the following parameters: the address of the second satellite and the satellite number of the second satellite.

In a possible manner, the inter-satellite link matching rule includes at least one of the following: the address of the second satellite and an address of the first satellite satisfy a satellite address difference, the satellite number of the second satellite and a satellite number of the first satellite satisfy a satellite number difference, and there is a mapping relationship between a track segment in which the second satellite is located and a track segment in which the first satellite is located; and the address of the first satellite is determined based on a projection location of the first satellite on a first ground projected track.

In a possible manner, the inter-satellite link matching rule is included in the creation message, or is pre-stored in the first satellite.

In a possible manner, the creation message further includes an identifier of a ground projected track of the second satellite.

In a possible manner, the address of the second satellite is alternatively determined based on the identifier of the second ground projected track.

In a possible manner, when the first satellite and the second satellite belong to a same ground co-track satellite chain, a condition that satisfies the satellite address difference includes: the address of the first satellite and the address of the second satellite are less than a first address threshold; and/or when the first satellite and the second satellite belong to a same ground co-track satellite chain, and the first satellite and the second satellite belong to adjacent track circles, a condition that satisfies the satellite address difference includes: a distance between the first satellite and the second satellite is less than a first distance threshold, or a distance between the first satellite and the second satellite is less than a first latitude threshold; or when the first satellite and the second satellite belong to a same ground co-track satellite chain, a condition that satisfies the satellite number difference includes: the satellite number of the first satellite and the satellite number of the second satellite are less than a first number threshold; and/or when the first satellite and the second satellite belong to a same ground co-track satellite chain, and the first satellite and the second satellite belong to adjacent track circles, a condition that satisfies the satellite number difference includes: a distance between the first satellite and the second satellite is less than a second distance threshold, or a distance between the first satellite and the second satellite is less than a second latitude threshold, where the ground co-track satellite chain includes a plurality of satellites that have a same ground projected track; and the track circle is a track segment that is of the ground projected track of the ground co-track satellite chain and that traverses a reference line twice in a same direction, and latitude of the reference line is fixed.

In a possible manner, when the first satellite and the second satellite belong to similar ground co-track satellite chains, and the first satellite and the second satellite belong to closest track circles, a condition that satisfies the satellite address difference includes: a distance between the first satellite and the second satellite is less than a third distance threshold, or a distance between the first satellite and the second satellite is less than a third latitude threshold; or when the first satellite and the second satellite belong to similar ground co-track satellite chains, and the first satellite and the second satellite belong to closest track circles, a condition that satisfies the satellite number difference includes: a distance between the first satellite and the second satellite is less than a fourth distance threshold, or a distance between the first satellite and the second satellite is less than a fourth latitude threshold, where satellites in the similar ground co-track satellite chains have a same orbital altitude and a same orbital inclination angle, and have only a longitude offset between ground projected tracks.

In a possible manner, the mapping relationship indicates that an identifier of a first track segment in which the first satellite is located corresponds to an identifier of a second track segment in which the second satellite is located.

In a possible manner, the first satellite and the second satellite belong to a same ground co-track satellite chain; the first satellite and the second satellite belong to similar ground co-track satellite chains; or the first satellite and the second satellite belong to different ground co-track satellite chains, and the first satellite and the second satellite do not belong to similar ground co-track satellite chains.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment; and the address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, the processing unit is further configured to establish an inter-satellite link between the first satellite and another satellite, where the establishing an inter-satellite link between the first satellite and another satellite includes at least one of the following trigger conditions:
the inter-satellite link between the first satellite and the second satellite is faulty, a satellite address difference between the first satellite and the second satellite exceeds a value of the satellite address difference, a satellite number difference between the first satellite and the second satellite exceeds a value of the satellite number difference, and there is no mapping relationship between the track segment in which the second satellite is located and the track segment in which the first satellite is located.

In a possible manner, the processing unit is further configured to re-establish an inter-satellite link between the first satellite and the second satellite, where the re-establishing an inter-satellite link between the first satellite and the second satellite includes at least one of the following trigger conditions:
a value of the satellite address difference is changed, a value of the satellite number difference is changed, or the mapping relationship between the track segment in which the second satellite is located and the track segment in which the first satellite is located is changed.

In another possible design, the communication apparatus includes a processor, and may further include a transceiver. The transceiver is configured to send and receive a signal, and the processor executes program instructions, to complete the method in any possible design or implementation of the first aspect. The communication apparatus may further include one or more memories. The memory is configured to be coupled to the processor, and the memory may store a necessary computer program or instructions for implementing the function in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In still another possible design, the communication apparatus includes a processor. The processor may be configured to be coupled to a memory. The memory may store a necessary computer program or necessary instructions for implementing the function in the first aspect or the second aspect. The processor may execute the computer program or the instructions stored in the memory. When the computer program is executed or the instructions are executed, the communication apparatus is enabled to implement the method in any possible design or implementation of the first aspect or the second aspect.

In still another possible design, the communication apparatus includes a processor and an interface circuit. The processor is configured to: communicate with another apparatus through the interface circuit, and perform the method in any possible design or implementation of the first aspect or the second aspect.

It may be understood that in the third aspect, the processor may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, an embodiment of this application provides a communication system. The communication system includes the first satellite and the second satellite in the first aspect.

According to a fifth aspect, this application provides a chip system. The chip system includes a processor, configured to implement the method in any possible design of the first aspect through a logic circuit or by executing computer instructions. The chip system may further include a memory, configured to store the computer instructions. The chip system may include a chip; or may include a chip and another discrete component.

According to a sixth aspect, this application further provides a computer-readable storage medium. The computer-readable storage medium stores computer-readable instructions. When the computer-readable instructions are run on a computer, the computer is enabled to perform the method in any possible design of the first aspect.

According to a seventh aspect, this application provides a computer program product including instructions. When the computer program product runs on a computer, the computer is enabled to perform the method in various embodiments of the first aspect.

For technical effects that can be achieved in the second aspect to the seventh aspect, refer to descriptions of technical effects that can be achieved in the corresponding possible design solutions in the first aspect. Details are not described herein again in this application.

### BRIEF DESCRIPTION OF DRAWINGS

FIG. 1 is a diagram of a terrestrial communication system;
FIG. 2 is a diagram of a non-terrestrial communication system according to an embodiment of this application;
FIG. 3 is a diagram of an architecture of a 5G satellite communication system according to an embodiment of this application;
FIG. 4A is a diagram of a ground co-track satellite chain;
FIG. 4B is a diagram of similar ground co-track satellite chains;
FIG. 4C is a diagram of adjacent track circles;
FIG. 4D is a diagram of next-door track circles;
FIG. 5 is a diagram of movement of ground co-track satellites;
FIG. 6 is a diagram of an architecture of another communication system according to an embodiment of this application;
FIG. 7 is a schematic flowchart of an inter-satellite link construction method according to an embodiment of this application;
FIG. 8 is a diagram of an address of a satellite according to an embodiment of this application;
FIG. 9 is a diagram of inter-satellite link construction according to an embodiment of this application;
FIG. 10 is a diagram of inter-satellite link construction according to an embodiment of this application;
FIG. 11 is a diagram of a structure of a communication apparatus according to an embodiment of this application;
FIG. 12 is a diagram of a structure of a communication apparatus according to an embodiment of this application; and
FIG. 13 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In descriptions of this application, unless otherwise specified, "a plurality of" means two or more. Therefore, mutual reference may be made to implementations of an apparatus and a method, and repeated descriptions are not provided again.

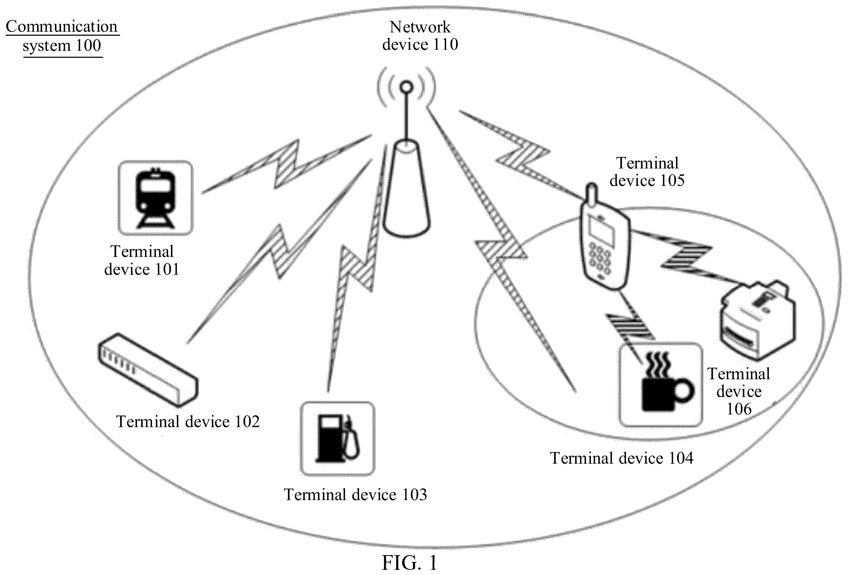

FIG. 1 shows an architecture of a terrestrial network communication system. The communication system 100 may include a network device 110 and terminal devices 101 to 106. It should be understood that the communication system 100 may include more or fewer network devices or terminal devices. The network device or the terminal device may be hardware, may be software obtained through function division, or may be a combination thereof. In addition, terminal devices 104 to 106 may also form a communication system. For example, the terminal device 105 may send downlink data to the terminal device 104 or the terminal device 106. The network device and the terminal device may communicate with each other through another device or network element. The network device 110 may send downlink data to the terminal devices 101 to 106, or may receive uplink data sent by the terminal devices 101 to 106. Certainly, the terminal devices 101 to 106 may also send uplink data to the network device 110, or may receive downlink data sent by the network device 110.

The network device 110 is a node in a radio access network (radio access network, RAN), and may also be referred to as a base station or a RAN node (or device). Currently, some examples of an access network device are a next generation NodeB (next generation NodeB, gNB), a transmission point (transmitting point, TP), a transmission reception point (transmission reception point, TRP), a home base station (for example, a home evolved NodeB or a home NodeB, HNB), a macro base station, a micro base station (also referred to as a small cell), a relay station, or a baseband unit (baseband unit, BBU) in a 5G network; or a network device in a communication system evolved after 5G. The network device 110 may alternatively be another device having a network device function. For example, the network device 110 may alternatively be a device that undertakes a base station function in device-to-device (device-to-device, D2D), vehicle-to-everything (vehicle-to-everything, V2X), or machine-to-machine (machine-to-machine, M2M) communication; may include a central unit (central unit, CU) and a distributed unit (distributed unit, DU) in a cloud access network (cloud radio access network, C-RAN) system; or may be a network device in an NTN communication system, in other words, the network device 110 may be deployed on a high-altitude platform or a satellite. This is not specifically limited in embodiments of this application.

The terminal devices 101 to 106 may also be referred to as UEs, mobile stations (mobile stations, MSs), mobile terminals (mobile terminals, MTs), or the like, and are devices that provide voice or data connectivity for users; or may be internet-of-things devices. For example, the terminal devices 101 to 106 each include a handheld device, a vehicle-mounted device, or the like that has a wireless connection function. Currently, the terminal devices 101 to 106 each may be a mobile phone (mobile phone), a tablet computer, a notebook computer, a palmtop computer, a customer-premises equipment (customer-premises equipment, CPE), a mobile internet device (mobile internet device, MID), a wearable device (for example, a smart watch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal devices 101 to 106 may alternatively be other devices having a terminal function. For example, the terminal devices 101 to 106 may alternatively be devices that function as terminals in D2D communication.

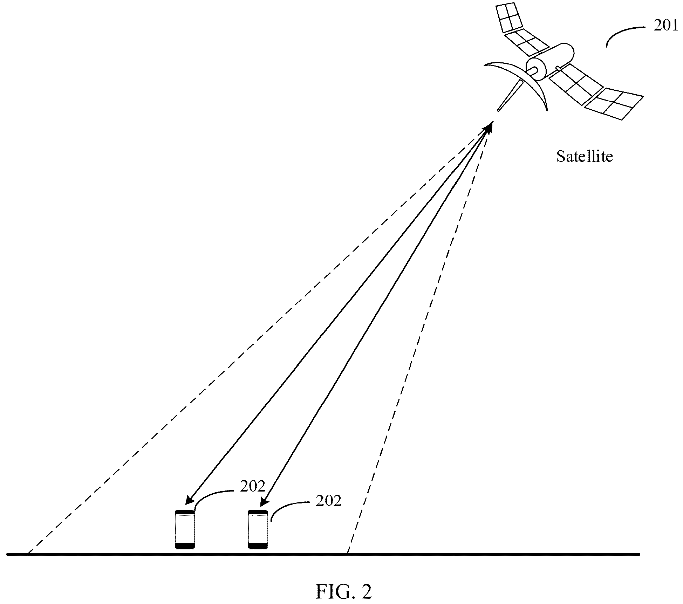

Based on the descriptions of the architecture of the terrestrial network communication system shown in FIG. 1, a satellite network routing method provided in embodiments of this application is applicable to an NTN communication system. As shown in FIG. 2, the NTN communication system includes a satellite 201 and terminal devices 202. For explanations of the terminal device 202, refer to related descriptions of the terminal devices 101 to 106. The satellite 201 may also be referred to as a high-altitude platform, a high-altitude aircraft, or a satellite base station. Upon comparison between the NTN communication system and the terrestrial network communication system, the satellite 201 may be considered as one or more network devices in the architecture of the terrestrial network communication system. The satellite 201 provides a communication service for the terminal devices 202, and the satellite 201 may further be connected to a core network device. For a structure and a function of the satellite 201, refer to the foregoing descriptions of the network device. For a communication manner between the satellite 201 and the terminal device 202, refer to the descriptions in FIG. 1. Details are not described herein again.

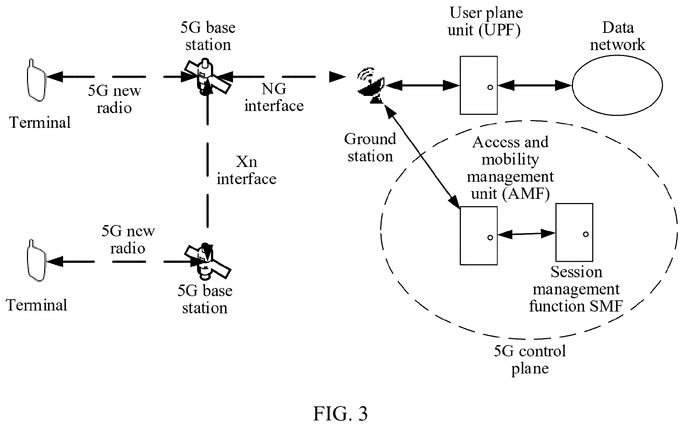

5G is used as an example. An architecture of a 5G satellite communication system is shown in FIG. 3. A ground terminal device accesses a network through 5G new radio. A 5G base station is deployed on a satellite, and is connected to a core network on the ground through a wireless link. In addition, a wireless link exists between satellites, to complete signaling exchanging and user data transmission between base stations. Devices and interfaces in FIG. 3 are described as follows:

A 5G core network provides services such as user access control, mobility management, session management, user security authentication, and charging. The 5G core network includes a plurality of functional units, which can be classified into control-plane and data-plane functional entities. An access and mobility management unit (access and mobility management function, AMF) is responsible for user access management, security authentication, and mobility management. A user plane unit (user plane function, UPF) is responsible for managing functions such as user plane data transmission and traffic statistics collection. A session management function (session management function, SMF) is mainly used for session management in a mobile network, for example, session establishment, modification, and release.

A ground station is responsible for forwarding signaling and service data between a satellite base station and the 5G core network.

5G new radio is a wireless link between a terminal and a base station.

An Xn interface is an interface between 5G base stations, and is mainly used for exchanging signaling, for example, handover.

An NG interface is an interface between a 5G base station and the 5G core network, and mainly exchanges non-access stratum (non-access stratum, NAS) signaling or other signaling of the core network, and service data of a user.

The network device in the terrestrial network communication system and the satellite in the NTN communication system may be collectively considered as network devices. An apparatus configured to implement a function of a network device may be a network device, or may be an apparatus, for example, a chip system, that can support the network device in implementing the function. The apparatus may be mounted in the network device. When the technical solutions provided in embodiments of this application are described below, an example in which an apparatus configured to implement a function of a network device is a satellite is used to describe the technical solutions provided in embodiments of this application. It may be understood that, when the method provided in embodiments of this application is applied to the terrestrial network communication system, an action performed by the satellite may be performed by a base station or a network device.

In embodiments of this application, an apparatus configured to implement a function of a terminal device may be a terminal device, or may be an apparatus, for example, a chip system, that can support the terminal device in implementing the function. The apparatus may be mounted in the terminal device. In embodiments of this application, the chip system may include a chip; or may include a chip and another discrete component. In the technical solutions provided in embodiments of this application, an example in which an apparatus configured to implement a function of a terminal device is a terminal or a UE is used to describe the technical solutions provided in embodiments of this application.

In addition, the satellite may be a geostationary satellite, a non-geostationary satellite, an artificial satellite, a low earth orbit satellite, a medium earth orbit satellite, a high earth orbit satellite, or the like. This is not specifically limited herein in this application.

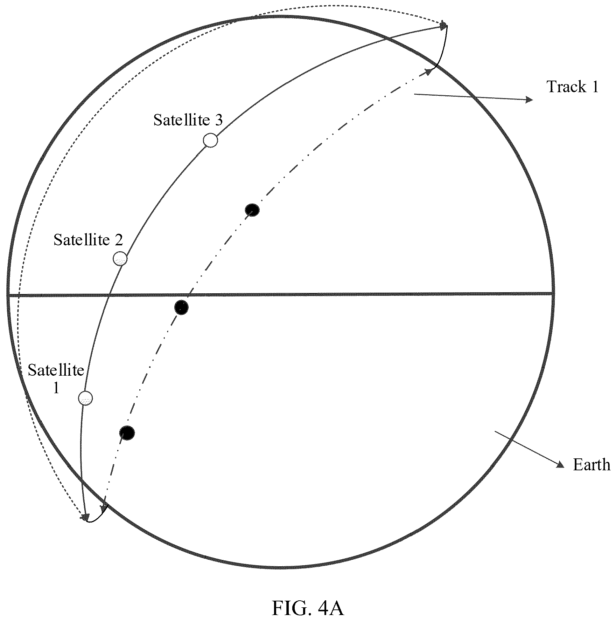

For ease of understanding embodiments of this application, the following first briefly describes terms in embodiments of this application.
(1) Ground co-track satellite chain: It includes a group of satellites having a same orbital inclination angle, but each satellite is on a discrete orbit, and projected tracks of the satellites on the ground are the same. As shown in FIG. 4A, a satellite 1, a satellite 2, and a satellite 3 are a group of satellites having a same orbital inclination angle and whose ground projected tracks are all a track 1. Example descriptions are merely provided herein, and no specific limitation is imposed. To enable tracks of a ground co-track satellite chain on the ground to be the same, all satellites on the satellite chain need to have a same orbital inclination angle, and any two satellites also have a same ratio of a right ascension of the ascending node (right ascension of the ascending node, RAAN) difference (right ascension of the ascending node difference, where the ascending node is a point at which a satellite passes from the southern hemisphere to the northern hemisphere through the equator) to an argument of latitude (argument of latitude, AoL) difference (argument of latitude difference, where the argument of latitude difference indicates an angular distance between any position of a planet or a satellite on its orbit and the ascending node), and the ratio can exactly compensate for longitude drift caused by the earth's rotation and orbital perturbation, that is, the ratio satisfies the following formula: $\frac{{ω}_{E} - \dot{Ω}}{{n}_{0} + {\dot{M}}_{0} + \dot{ω}} = \frac{δRAAN}{δAoL}$

ω_{E} is an angular velocity of the earth's rotation, n₀ is a satellite motion angular velocity, Ω̇ is an orbital perturbation amount of right ascension of the ascending node, Ṁ₀ is an orbital perturbation amount of a mean anomaly, ω̇ is an orbital perturbation amount of an argument of perigee, δRAAN is the right ascension of the ascending node difference between satellite orbits, and δAoL is the argument of latitude difference between the satellites.

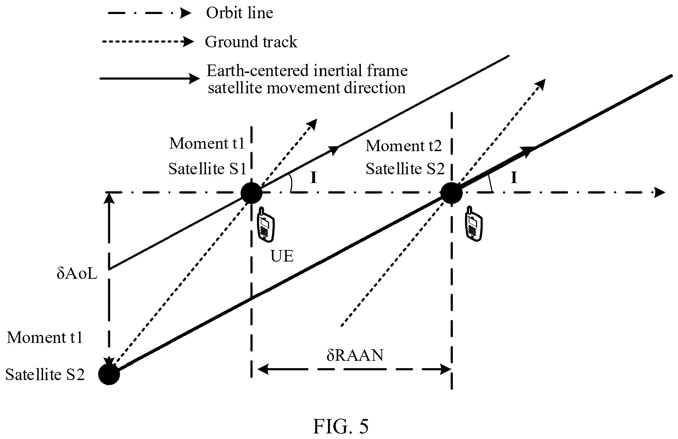

As shown in FIG. 5, a satellite S1 and a satellite S2 are two satellites of a ground co-track satellite chain. The satellite S1 and the satellite S2 are both on independent orbits, and have a same orbital inclination angle I. At a moment t1, the satellite S1 passes from south to north through the equator, a ground projection of the satellite S1 is exactly located at a UE, and the satellite S2 is at south of the equator and west of the satellite S1. Because of the earth's rotation, the satellite S2 also passes through a same point on the equator at a moment t2, and a ground projection of the satellite S2 is also exactly located at the UE (it is assumed that the UE is stationary). Although the satellite S1 and the satellite S2 run on different orbits, their moving tracks on the ground are the same.

(2) Ground co-track constellation: It is a constellation including one or more ground co-track satellite chains.

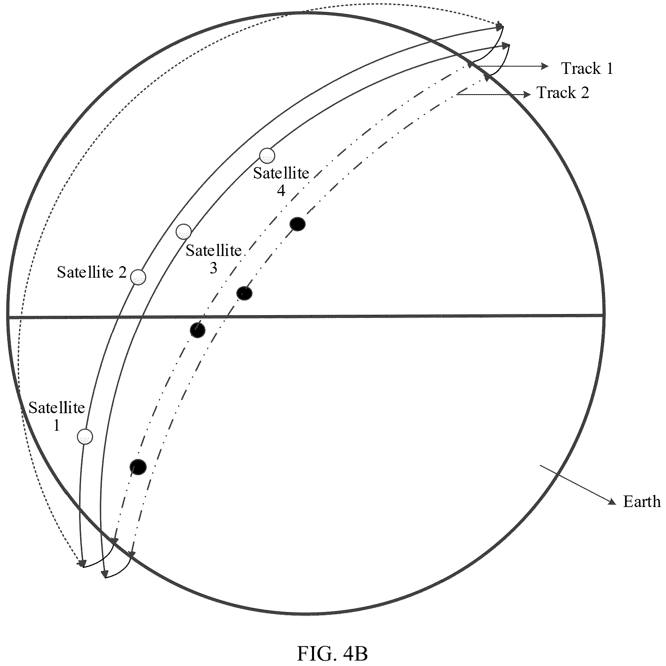

(3) Similar ground co-track satellite chains: Satellites in the similar ground co-track satellite chains have a same orbital altitude and a same orbital inclination angle, and have only a longitude offset between ground projected tracks. As shown in FIG. 4B, a satellite 1, a satellite 2, a satellite 3, and a satellite 4 are a group of satellites having a same orbital inclination angle. However, projected tracks of the satellite 1 and the satellite 2 on the ground are a track 1, and projected tracks of the satellite 3 and the satellite 4 on the ground are a track 2. There is only a longitude offset between the track 1 and the track 2. Example descriptions are merely provided herein, and no specific limitation is imposed.

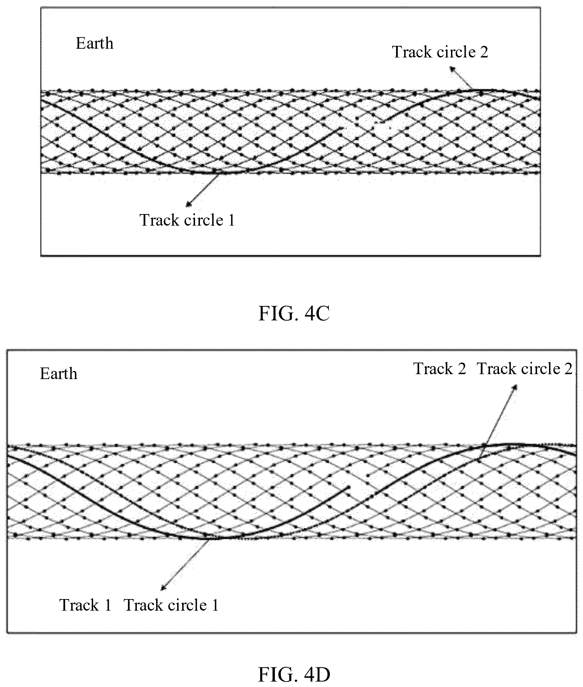

(4) Track circle: It is a track segment that is of a ground projected track of a ground co-track satellite chain and that traverses a reference line twice in a same direction, and latitude of the reference line is fixed, where the reference line is located in a latitude range in which a satellite in the ground co-track satellite chain has a maximum inclination angle on the ground projected track. For example, if a latitude range in which a satellite in ground co-track satellites has a maximum inclination angle on the ground projected track is [30 degrees, 60 degrees], a latitude at which the reference line is located may be 45 degrees. As shown in FIG. 4C, a track circle 1 and a track circle 2 are used as examples for description in the figure, and the track circle 1 and the track circle 2 are adjacent track circles.

(5) Initial longitude of the track circle: A geographic longitude at which the track circle crosses the reference line for the first time may indicate a distance of the track circle.

(6) Next-door track circles: Next-door track circles are closest track circles in the similar ground co-track satellite chains. As shown in FIG. 4D, a ground co-track satellite chain 1 and a ground co-track satellite chain 2 are used as an example for description in the figure. A ground projected track of a satellite in the ground co-track satellite chain 1 is a track 1, and a ground projected track of a satellite in the ground co-track satellite chain 2 is a track 2. A track circle 1 on the track 1 and a track circle 2 on the track 2 are closest to each other, and are next-door track circles.

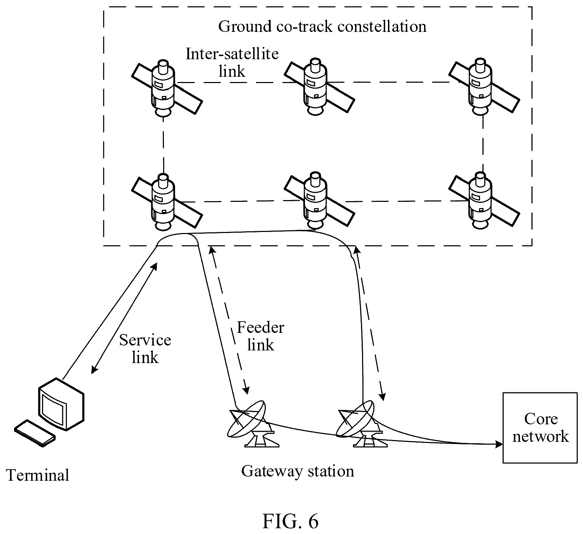

In this application, a new satellite network routing method is provided based on a feature that satellites in a ground co-track satellite chain have a same ground projected track. In addition to the systems shown in FIG. 2 and FIG. 3, the method may be further applied to a communication system shown in FIG. 6. Devices in FIG. 6 are described as follows:

A ground co-track constellation may forward or route data of a terminal, a gateway station, and a core network.

A satellite in the ground co-track constellation has an inter-satellite link, and may forward data to an adjacent satellite through the inter-satellite link.

Ground facilities include ground devices, such as the terminal and a ground station, that are connected to the ground co-track constellation.

The terminal accesses a network through the satellite, may communicate with the satellite through a service link, and may send data to another terminal or a core network (the internet) through the satellite (the ground co-track constellation).

The gateway station communicates with the satellite (the ground co-track constellation) through a feeder link to provide transit between the satellite and the core network.

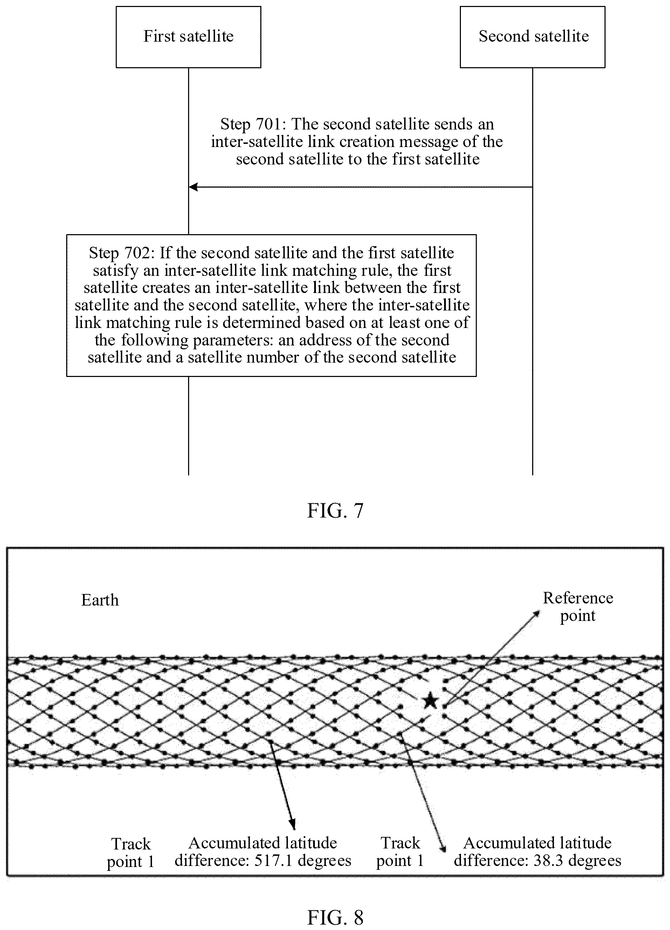

In consideration of a fact that there is no solution for constructing an inter-satellite link based on a satellite constellation with discrete orbits in the conventional technology, and in consideration of a fact that orbits of satellites in a ground co-track constellation are discrete, and there may be a plurality of ground co-track satellite chains in the ground co-track constellation; in addition, satellites included in one ground co-track satellite chain have a same orbit inclination angle and a same ground projected track. In this application, an inter-satellite link between satellites may be constructed based on a property that satellites in a ground co-track satellite chain have a same ground projected track, to overcome a problem in the conventional technology that an inter-satellite link cannot be constructed based on a satellite constellation with discrete orbits. This application provides an inter-satellite link construction method. As shown in FIG. 7, the method may be performed by a satellite. The satellite may be a geostationary satellite, a non-geostationary satellite, an artificial satellite, a low earth orbit satellite, a medium earth orbit satellite, a high earth orbit satellite, or the like. This is not specifically limited herein in this application. In FIG. 7, a first satellite and a second satellite are used as an example for description. A quantity of satellites is not limited in this application. The method is performed as follows.

Step 701: The second satellite sends an inter-satellite link creation message of the second satellite to the first satellite, where the inter-satellite link creation message includes at least one of the following: an address of the second satellite and a satellite number of the second satellite, and the address of the second satellite is determined based on a projection location of the second satellite on a second ground projected track.

Correspondingly, the first satellite receives the inter-satellite link creation message of the second satellite.

It should be noted that an inter-satellite link is a link for communication between satellites, and is also referred to as an inter satellite link or a crosslink (crosslink). Data transmission and exchanging between the satellites may be implemented through the inter-satellite link. A plurality of satellites are interconnected through the inter-satellite link, to form a space communication network in which the satellite is used as a switching node.

An inter-satellite link creation message may include only an address of the satellite, may include only a number of the satellite, or may include both the address of the satellite and the number of the satellite. This is not specifically limited herein in this application. The address of the satellite may be determined based on a property that the satellite is a satellite on a ground co-track satellite chain and satellites in the ground co-track satellite chain have a same ground projected track, and a projection location of the satellite on the ground projected track. The address of the second satellite may be determined based on the projection location of the second satellite on the second ground projected track. An address of the first satellite may be determined based on a projection location of the first satellite on a first ground projected track.

In a possible implementation, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment. The address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

In this application, the address of the satellite is indicated by using a track point or a track segment on the ground projected track of the satellite, so that the property that the satellites in the ground co-track satellite chain have the same ground projected track can be fully used. During routing and addressing, routing and addressing complexity is reduced, and routing and addressing efficiency is improved.

In a possible implementation, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

It should be noted that the track point may be indicated by using a distance from the reference point to the track point. For example, the reference point is any point on a projected track 1, and a location 10 meters away from the reference point is the track point. In this case, the track point may be indicated by using 10 meters. The track point may be indicated by using a satellite motion phase difference accumulated from the reference point to the track point. For example, the reference point is any point on a projected track 1, a satellite ground projection is located at the reference point at a moment 1, and the satellite ground projection is located at the track point after X moments. In this case, the track point may be indicated by using a satellite motion phase difference accumulated from the moment 1 to a moment X+1. The track point may be indicated by using a latitude difference accumulated from the reference point to the track point. For example, the reference point is any point on a projected track 1, the reference point is located at latitude 1, and Y latitude needs to be passed from the reference point to the track point. In this case, the track point may be indicated by using the Y latitude. The track point is indicated in different manners, so that routing and addressing flexibility can be improved.

In a possible implementation, a track location accumulated from the reference point to the track point may be defined as a ground projected track address (ground track address, GTA). As shown in FIG. 8, a track point shown by a pentagram is a reference point, if an accumulated latitude difference of a satellite moving along a ground projected track is used as a location difference, a GTA of a track point 1 is a latitude difference accumulated from the reference point to the track point 1, that is, 38.3 degrees, and a GTA of a track point 2 is a latitude difference accumulated from the reference point to the track point 2, that is, 517.1 degrees. In addition, when there are a plurality of satellite tracks on the ground, each satellite track may be distinguished by using a track number, and a track location may be jointly described by using the track number and a location on the track. In addition, a track segment of the ground projected track may be defined as a ground projected track address range (ground track address range, GTAR), and may be generally described by using GTAs at two ends of the track, for example, a track GTAR between the track point 1 and the track point 2 is (GTA0, GTA1).

In a possible implementation, the address of the satellite may be determined based on at least one of the following parameters: a longitude and latitude location of the satellite, an ephemeris of the satellite, or the satellite number of the satellite.

For example, current location information of the first satellite may be learned of based on a longitude and latitude location of the first satellite. An ephemeris of the first satellite includes information such as orbit information of the first satellite and an altitude of the first satellite. The current location information of the first satellite may be obtained based on the ephemeris of the first satellite. Satellite numbers may be sequentially numbered based on a sequence of the satellites in the ground co-track satellite chain. The ephemeris of the first satellite may be learned of based on a number of the first satellite, and a current location of the first satellite is further determined based on the ephemeris of the first satellite. A location of the first satellite on the ground projected track may be learned of based on the current location information of the first satellite, and the address of the first satellite may be obtained based on preset reference point information.

Optionally, the creation message further includes an identifier of the ground projected track of the second satellite. The creation message includes the identifier of the ground projected track of the second satellite, so that the first satellite can simply determine, based on the identifier of the ground projected track of the second satellite, whether the second satellite can construct an inter-satellite link to the first satellite.

Optionally, the address of the second satellite is alternatively determined based on the identifier of the second ground projected track. The address of the first satellite may alternatively be determined based on an identifier of the first ground projected track.

It should be noted that different satellites may be located in different ground co-track satellite chains, and a projected track of a satellite may be determined based on a track identifier of a ground co-track satellite chain on a ground projection. Based on this, it is simpler and more convenient to determine an address of the satellite.

Step 702: If the second satellite and the first satellite satisfy an inter-satellite link matching rule, the first satellite creates the inter-satellite link between the first satellite and the second satellite, where the inter-satellite link matching rule is determined based on at least one of the following parameters: the address of the second satellite and the satellite number of the second satellite.

Specifically, the first satellite may determine, based on the inter-satellite link creation message sent by the second satellite, whether the first satellite and the second satellite satisfy the inter-satellite link matching rule.

If the first satellite and the second satellite satisfy the inter-satellite link matching rule, the first satellite may send an inter-satellite link creation success response message or identification information of the inter-satellite link to the second satellite. The identification information of the inter-satellite link may indicate that the inter-satellite link between the first satellite and the second satellite is successfully created.

If the first satellite and the second satellite do not satisfy the inter-satellite link matching rule, the first satellite may send a creation failure response message to the second satellite. The creation failure response message indicates that the inter-satellite link between the first satellite and the second satellite fails to be created. Optionally, a creation failure cause is carried in the creation failure response message.

The second satellite may learn, based on the response message, whether the first satellite and the second satellite can create the inter-satellite link. After creating the inter-satellite link between the first satellite and the second satellite, the first satellite may transmit data through the inter-satellite link. A specific function of the successfully created inter-satellite link is not specifically limited herein in this application.

In this application, the inter-satellite link matching rule is determined based on the address of the second satellite and the satellite number of the second satellite. For example, after receiving the inter-satellite link creation message, the first satellite performs determining based on the address of the second satellite and the address of the first satellite, and if determining that the second satellite and the first satellite satisfy a preset address difference or distance threshold, the first satellite determines that the inter-satellite link matching rule is satisfied. For example, after receiving the inter-satellite link creation message, the first satellite performs determining based on the satellite number of the second satellite and a satellite number of the first satellite, and if determining that the second satellite and the first satellite satisfy a preset number difference or distance threshold, the first satellite determines that the inter-satellite link matching rule is satisfied. Therefore, after receiving the address of the second satellite or the satellite number of the second satellite, the first satellite may determine whether the second satellite and the first satellite satisfy the inter-satellite link matching rule.

Optionally, the inter-satellite link matching rule includes at least one of the following: the address of the second satellite and the address of the first satellite satisfy a satellite address difference, the satellite number of the second satellite and the satellite number of the first satellite satisfy a satellite number difference, and there is a mapping relationship between a track segment in which the second satellite is located and a track segment in which the first satellite is located.

For example, if the satellite address difference is set to X, and it is determined, based on the address of the first satellite and the address of the second satellite, that a distance between the first satellite and the second satellite is less than or equal to X, it is determined that the first satellite and the second satellite can construct the inter-satellite link. If the satellite number difference is set to A, and it is determined, based on the satellite number of the first satellite and the satellite number of the second satellite, that a satellite number difference between the first satellite and the second satellite is less than or equal to A, it is determined that the first satellite and the second satellite can construct the inter-satellite link. If there is a one-to-one mapping relationship between a track segment 1 in which the first satellite is located and a track segment 2 in which the second satellite is located, in other words, when the first satellite is located in the track segment 1, the first satellite can construct the inter-satellite link to the second satellite in the track segment 2. Example descriptions are merely provided herein, and no specific limitation is imposed.

In this application, the inter-satellite link matching rule may be determined based on the address of the satellite and the number of the satellite, and depending on whether there is a mapping relationship between tracks in which the satellites are located. In this manner, it can be ensured that the satellite can establish an appropriate inter-satellite link, to ensure efficiency of constructing an inter-satellite link between ground co-track satellites, and ensure link stability, so as to avoid frequent link creation.

In a possible implementation, the inter-satellite link matching rule is included in the creation message. After receiving the creation message, the first satellite may determine, based on the inter-satellite link matching rule, whether the first satellite and the second satellite can create the inter-satellite link.

In a possible implementation, the inter-satellite link matching rule may be pre-stored in the first satellite. After receiving the creation message, the first satellite may determine, based on the inter-satellite link matching rule pre-stored in the first satellite, whether the first satellite and the second satellite can create the inter-satellite link.

Before different inter-satellite link matching rules are described, a location relationship between the satellites is first described. The following location relationships are mainly included:
Location relationship 1: The first satellite and the second satellite belong to a same ground co-track satellite chain.
Location relationship 2: The first satellite and the second satellite belong to similar ground co-track satellite chains.
Location relationship 3: The first satellite and the second satellite belong to different ground co-track satellite chains, and the first satellite and the second satellite do not belong to similar ground co-track satellite chains.

For understanding of each location relationship, refer to the foregoing term explanations. Details are not described herein again in this application.

To better describe the solutions in this application, the following describes different inter-satellite link matching rules in different cases.

Case 1: The inter-satellite link matching rule is that the address of the second satellite and the address of the first satellite satisfy the satellite address difference.

It should be noted that the inter-satellite link matching rule is determined based on the satellite address difference; however, when the first satellite and the second satellite are in different location relationships, the inter-satellite link may be constructed in different manners. Details are as follows:
Manner 1: The location relationship between the first satellite and the second satellite is the location relationship 1.

When the first satellite and the second satellite belong to the same ground co-track satellite chain, a condition that satisfies the satellite address difference includes: the address of the first satellite and the address of the second satellite are less than a first address threshold. For example, when the address of the first satellite is indicated by using GTA1, the address of the second satellite is indicated by using GTA2, and an absolute value of a difference between GTA2 and GTA1 is less than a first address threshold GTAX, it is determined that the first satellite and the second satellite can construct the inter-satellite link.

In a possible implementation, after determining the address of the second satellite, the second satellite may further search, in a first address threshold range, for satellites in the same ground co-track satellite chain, use all the satellites in the first address threshold range as candidate satellites for constructing the inter-satellite link, then select a first satellite (namely, the first satellite) closest to the second satellite from the candidate satellites, and send the inter-satellite link creation message, to construct the inter-satellite link between the second satellite and the first satellite; or set priorities for the candidate satellites based on properties (data transmission latencies, bandwidths, or the like) of the satellites, and use a satellite with a higher priority as the first satellite. Example descriptions are merely provided herein, and no specific limitation is imposed.

When the location relationship between the first satellite and the second satellite is the location relationship 1, and the first satellite and the second satellite belong to adjacent track circles, a condition that satisfies the satellite address difference includes: a distance between the first satellite and the second satellite is less than a first distance threshold, or a distance between the first satellite and the second satellite is less than a first latitude threshold. A GTA difference (ΔGTA) between two points on the ground projected track modulo a GTA (360°) of a circle is a latitude difference Δ*GTAᵣₑₗ* = |Δ*GTA*|%360 between the two points. For example, when the address of the first satellite is indicated by using GTA1, the address of the second satellite is indicated by using GTA2, and an absolute value of a latitude difference between GTA2 and GTA1 is less than the first latitude threshold, it is determined that the first satellite and the second satellite can construct the inter-satellite link.

In a possible implementation, before step 701 is performed, after determining the address of the second satellite, the second satellite may further search, in a first latitude threshold range, for satellites that are in the same ground co-track satellite chain and that are located in adjacent track circles, use all the satellites in the first latitude threshold range as candidate satellites for constructing the inter-satellite link, then select the first satellite from the candidate satellites, and send the inter-satellite link creation message to the first satellite, to construct the inter-satellite link between the first satellite and the second satellite. For example, a satellite with a smallest latitude difference from the second satellite is selected as the first satellite, in other words, a latitude difference between the second satellite and the first satellite is min(Δ*GTAᵣₑₗ*); or a satellite with a high priority is selected as the first satellite. The priority may be set based on a property of the satellite. The property of the satellite may be specifically a data transmission latency, a bandwidth, or the like. Example descriptions are merely provided herein, and no specific limitation is imposed.

In a possible implementation, how to construct an inter-satellite link may be further determined based on a distance between satellites in adjacent track circles. For example, when the address of the first satellite is indicated by using GTA1, the address of the second satellite is indicated by using GTA2, and an absolute value of a distance difference between GTA2 and GTA1 is less than the first distance threshold, it is determined that the first satellite and the second satellite can construct the inter-satellite link.

In another possible implementation, when establishing the inter-satellite link, the second satellite may search, in a first distance threshold range of the address of the second satellite, for satellites that are in the same ground co-track satellite chain and that are located in adjacent track circles, use the satellites in the first distance threshold range as candidate satellites for constructing the inter-satellite link, then select the first satellite from the candidate satellites, and send the inter-satellite link creation message to the first satellite, to construct the inter-satellite link between the first satellite and the second satellite. For example, a satellite closest to the second satellite is selected from the candidate satellites as the first satellite, to be specific, a distance between the second satellite and the first satellite may be min(ΔGTAᵣₑₗ) + ΔLong_{neibor_loop} * cos(i), where ΔLong_{neibor_loop} is a difference between initial longitudes of the adjacent track circles, and i is an orbital inclination angle, in other words, a satellite with a high priority is selected from the candidate satellites as the first satellite. The priority of the satellite may be set based on a property of the satellite. The property of the satellite may be specifically a data transmission latency, a bandwidth, or the like. Example descriptions are merely provided herein, and no specific limitation is imposed.

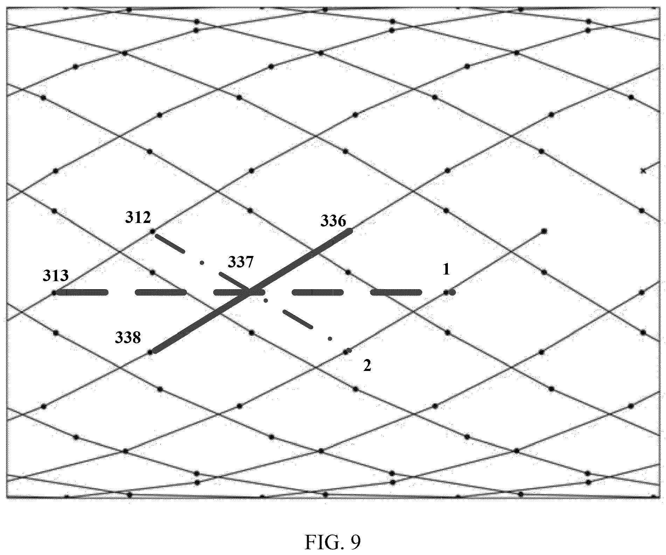

In FIG. 9, an example in which an inter-satellite link is configured for a satellite 337 is used for description. A solid line is an inter-satellite link between satellites (336 and 338) with a smallest GTA difference in a same track segment. A dashed line is an inter-satellite link between satellites (313 and 1) whose relative GTAs are closest in satellites in adjacent track circles. A dotted line is an inter-satellite link between satellites (312 and 2) that are closest to each other in the satellites in the adjacent track circles.

Manner 2: The location relationship between the first satellite and the second satellite is the location relationship 2.

When the first satellite and the second satellite belong to similar ground co-track satellite chains, and the first satellite and the second satellite belong to closest track circles, a condition that satisfies the satellite address difference includes: a distance between the first satellite and the second satellite is less than a third distance threshold, or a distance between the first satellite and the second satellite is less than a third latitude threshold.

It should be noted that, when an inter-satellite link in similar ground co-track satellite chains is constructed, the inter-satellite link may be established between satellites that are closest or close to each other (less than the third distance threshold) in closest track circles; or the inter-satellite link may be constructed by selecting satellites whose latitude distances are closest or close to each other (less than the third latitude threshold) in closest track circles. For understanding, refer to the manner of constructing the inter-satellite link between the satellites that are in the ground co-track satellite chain and that are located in the adjacent track circles in the foregoing manner 1. Details are not described herein again.

Case 2: The inter-satellite link matching rule is that the satellite number of the second satellite and the satellite number of the first satellite satisfy the satellite number difference.

It should be noted that the inter-satellite link matching rule is determined based on the satellite number difference; however, when the first satellite and the second satellite are in different location relationships, the inter-satellite link may be constructed in different manners. Details are as follows:
Manner 1: The location relationship between the first satellite and the second satellite is the location relationship 1.

When the first satellite and the second satellite belong to a same ground co-track satellite chain, a condition that satisfies the satellite number difference includes: the satellite number of the first satellite and the satellite number of the second satellite are less than a first number threshold. For example, when the satellite number of the first satellite is indicated by using a number 1, the satellite number of the second satellite is indicated by using a number 2, and an absolute value of a difference between the number 2 and the number 1 is less than a first number threshold number Y, it is determined that the first satellite and the second satellite can construct the inter-satellite link.

In a possible implementation, before step 701 is performed, after determining the satellite number of the second satellite, the second satellite may further search, in a first number threshold range, for satellites that are in the same ground co-track satellite chain, use all the satellites in the first number threshold range as candidate satellites for constructing the inter-satellite link, then select the first satellite from the candidate satellites, and send the inter-satellite link creation message to the first satellite, to construct the inter-satellite link between the first satellite and the second satellite. For example, a satellite closest to the second satellite is selected from the candidate satellites as the first satellite, or a satellite with a high priority is selected from the candidate satellites as the first satellite. The priority of the satellite may be set based on a property of the satellite. The property of the satellite may be specifically a data transmission latency, a bandwidth, or the like. Example descriptions are merely provided herein, and no specific limitation is imposed.

When the first satellite and the second satellite belong to a same ground co-track satellite chain, and the first satellite and the second satellite belong to adjacent track circles, a condition that satisfies the satellite number difference includes: a distance between the first satellite and the second satellite is less than a second distance threshold, or a distance between the first satellite and the second satellite is less than a second latitude threshold. For understanding, refer to the satellites belonging to the adjacent track circles in the manner 1 in the case 1. Details are not described herein again.

Manner 2: The location relationship between the first satellite and the second satellite is the location relationship 2.

When the first satellite and the second satellite belong to similar ground co-track satellite chains, and the first satellite and the second satellite belong to closest track circles, a condition that satisfies the satellite number difference includes: a distance between the first satellite and the second satellite is less than a fourth distance threshold, or a distance between the first satellite and the second satellite is less than a fourth latitude threshold. For understanding, refer to the manner 2 in the case 1. Details are not described herein again.

It should be noted that the first address threshold, the first number threshold, the first distance threshold, the second distance threshold, the third distance threshold, the fourth distance threshold, the first latitude threshold, the second latitude threshold, the third latitude threshold, and the fourth latitude threshold mentioned in the case 1 and the case 2 may be flexibly set based on an actual situation, and specific values of the thresholds are not specifically limited herein in this application. Optionally, some thresholds may alternatively be set to be a same value. For example, the first latitude threshold is the same as the second latitude threshold. Example descriptions are merely provided herein, and no specific limitation is imposed.

Case 3: The inter-satellite link matching rule is that there is the mapping relationship between the track segment in which the second satellite is located and the track segment in which the first satellite is located.

It should be noted that the inter-satellite link matching rule shown in the case 3 may adapt to the satellites in the location relationship 1, the location relationship 2, and the location relationship 3.

Optionally, the first satellite determines that there is the mapping relationship between the track segment in which the first satellite is located and the track segment in which the second satellite is located, and the first satellite constructs the inter-satellite link to the second satellite, where the mapping relationship indicates that an identifier of a first track segment in which the first satellite is located corresponds to an identifier of a second track segment in which the second satellite is located.

Because satellites in a ground co-track satellite chain and satellites in similar ground co-track satellite chains have a constant relative flight speed (vector), a constant inter-satellite link may be established based on a mapping relationship existing between track segments. However, a long-time inter-satellite link cannot be established because flight speeds (vectors) of satellites in dissimilar ground co-track satellite chains are not constant. However, due to a ground co-track feature, an inter-satellite link may be established for a period of time based on the foregoing mapping relationship. Therefore, two satellite chain track segments can be configured to establish the inter-satellite link. For example, pairing is performed according to the following rule: After the satellite enters a configured track number+GTAR, the satellite searches for a satellite in a track number+GTAR of another satellite chain, to construct an inter-satellite link.

After the satellite leaves the configured track number+GTAR, the satellite disconnects the inter-satellite link. Generally, two track segments having an intersection point are paired, and an inter-satellite link established between satellites in the two track segments may be maintained for a long time.

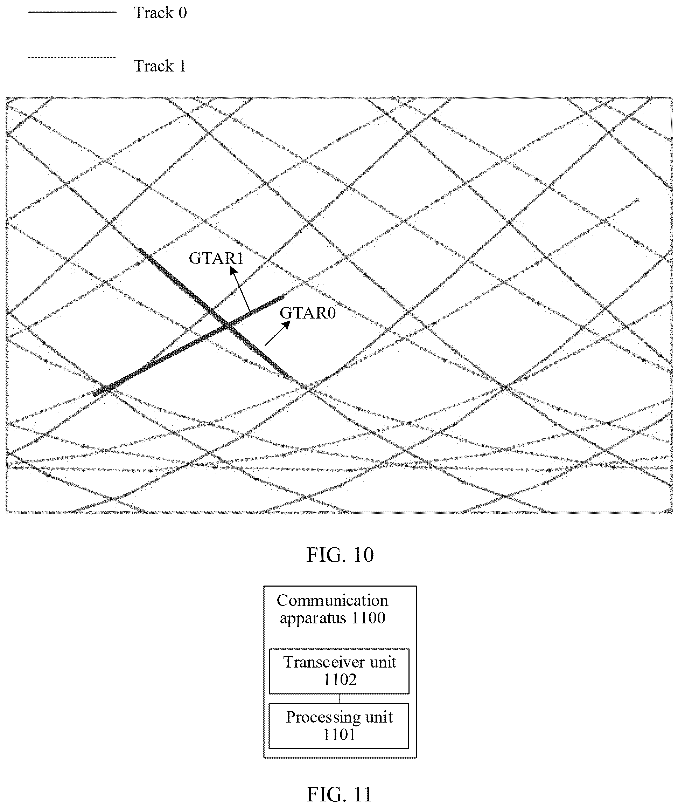

As shown in FIG. 10, when entering GTARO, a satellite on a track 0 searches for a satellite in GTAR1 on a track 1, to establish an inter-satellite link. When leaving GTARO, the satellite disconnects the inter-satellite link. It should be noted that, when entering GTARO, the satellite on the track 0 may send a broadcast message or a multicast message to a satellite in GTAR2. The message includes a track number and a track segment of the satellite, or satellite ephemeris information, the satellite that receives the broadcast message or the multicast message may directly determine, based on the track number and the track segment in the message, whether a mapping relationship is satisfied; and if the mapping relationship is satisfied, construct an inter-satellite link; or may determine, through calculation based on the satellite ephemeris information, a track number and a track segment of the satellite, and then determine whether a mapping relationship is satisfied, and whether to construct an inter-satellite link.

In this application, constructing the inter-satellite link based on the foregoing case can ensure efficiency of constructing an inter-satellite link between ground co-track satellites.

In addition, the first satellite may further establish an inter-satellite link between the first satellite and another satellite, where the establishing an inter-satellite link between the first satellite and another satellite includes at least one of the following trigger conditions:
the inter-satellite link between the first satellite and the second satellite is faulty (for example, a communication link between the first satellite and the second satellite is disconnected, or communication of the second satellite is faulty), a satellite address difference between the first satellite and the second satellite exceeds a value of the satellite address difference, a satellite number difference between the first satellite and the second satellite exceeds a value of the satellite number difference, and there is no mapping relationship between the track segment in which the second satellite is located and the track segment in which the first satellite is located.

In this application, constructing the inter-satellite link between the first satellite and the another satellite can ensure efficiency of constructing an inter-satellite link between ground co-track satellites.

Optionally, the first satellite may further re-establish an inter-satellite link between the first satellite and the second satellite, where the re-establishing an inter-satellite link between the first satellite and the second satellite includes at least one of the following trigger conditions:
a value of the satellite address difference is changed, a value of the satellite number difference is changed, or the mapping relationship between the track segment in which the second satellite is located and the track segment in which the first satellite is located is changed (for example, the mapping relationship between the track segment 1 and the track segment 2 is changed to a mapping relationship between the track segment 1 and a track segment 3).

In other words, when the inter-satellite link matching rule is changed, the inter-satellite link between the first satellite and the second satellite is reconstructed, so that efficiency of constructing the inter-satellite link can be ensured.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 11 is a possible example block diagram of a communication apparatus according to an embodiment of this application. As shown in FIG. 11, the communication apparatus 1100 may include a processing unit 1101 and a transceiver unit 1102. The processing unit 1101 is configured to control and manage an action of the communication apparatus 1100. The transceiver unit 1102 is configured to support communication between the communication apparatus 1100 and another device. Optionally, the transceiver unit 1102 may include a receiving unit and/or a sending unit, which are respectively configured to perform a receiving operation and a sending operation. Optionally, the communication apparatus 1100 may further include a storage unit, configured to store program code and/or data of the communication apparatus 1100. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the first satellite, the second satellite, or the like.

In an embodiment, the transceiver unit 1102 is configured to receive an inter-satellite link creation message of a second satellite, where the inter-satellite link creation message includes at least one of the following: an address of the second satellite and a satellite number of the second satellite, and the address of the second satellite is determined based on a projection location of the second satellite on a second ground projected track; and the processing unit 1101 is configured to: if the second satellite and the first satellite satisfy an inter-satellite link matching rule, the first satellite creates an inter-satellite link between the first satellite and the second satellite, where the inter-satellite link matching rule is determined based on at least one of the following parameters: the address of the second satellite and the satellite number of the second satellite.

In another embodiment, the processing unit 1101 is configured to determine an inter-satellite link creation message; and the transceiver unit 1102 is configured to send the inter-satellite link creation message to a first satellite, where the inter-satellite link creation message includes at least one of the following: an address of the second satellite and a satellite number of the second satellite, and the address of the second satellite is determined based on a projection location of the second satellite on a second ground projected track; and an inter-satellite link matching rule is determined based on at least one of the following parameters: the address of the second satellite and the satellite number of the second satellite.

In a possible manner, the inter-satellite link matching rule includes at least one of the following: the address of the second satellite and an address of the first satellite satisfy a satellite address difference, the satellite number of the second satellite and a satellite number of the first satellite satisfy a satellite number difference, and there is a mapping relationship between a track segment in which the second satellite is located and a track segment in which the first satellite is located; and the address of the first satellite is determined based on a projection location of the first satellite on a first ground projected track.

In a possible manner, the inter-satellite link matching rule is included in the creation message, or is pre-stored in the first satellite.

In a possible manner, the creation message further includes an identifier of the ground projected track of the second satellite.

In a possible manner, the address of the second satellite is alternatively determined based on the identifier of the second ground projected track.

In a possible manner, when the first satellite and the second satellite belong to a same ground co-track satellite chain, a condition that satisfies the satellite address difference includes: the address of the first satellite and the address of the second satellite are less than a first address threshold; and/or when the first satellite and the second satellite belong to a same ground co-track satellite chain, and the first satellite and the second satellite belong to adjacent track circles, a condition that satisfies the satellite address difference includes: a distance between the first satellite and the second satellite is less than a first distance threshold, or a distance between the first satellite and the second satellite is less than a first latitude threshold, where the ground co-track satellite chain includes a plurality of satellites that have a same ground projected track; and the track circle is a track segment that is of the ground projected track of the ground co-track satellite chain and that traverses a reference line twice in a same direction, and latitude of the reference line is fixed.

In a possible manner, when the first satellite and the second satellite belong to a same ground co-track satellite chain, a condition that satisfies the satellite number difference includes: the satellite number of the first satellite and the satellite number of the second satellite are less than a first number threshold; and/or when the first satellite and the second satellite belong to a same ground co-track satellite chain, and the first satellite and the second satellite belong to adjacent track circles, a condition that satisfies the satellite number difference includes: a distance between the first satellite and the second satellite is less than a second distance threshold, or a distance between the first satellite and the second satellite is less than a second latitude threshold, where the ground co-track satellite chain includes a plurality of satellites that have a same ground projected track; and the track circle is a track segment that is of the ground projected track of the ground co-track satellite chain and that traverses a reference line twice in a same direction, and latitude of the reference line is fixed.

In a possible manner, when the first satellite and the second satellite belong to similar ground co-track satellite chains, and the first satellite and the second satellite belong to closest track circles, a condition that satisfies the satellite address difference includes: a distance between the first satellite and the second satellite is less than a third distance threshold, or a distance between the first satellite and the second satellite is less than a third latitude threshold, where satellites in the similar ground co-track satellite chains have a same orbital altitude and a same orbital inclination angle, and have only a longitude offset between ground projected tracks.

In a possible manner, when the first satellite and the second satellite belong to similar ground co-track satellite chains, and the first satellite and the second satellite belong to closest track circles, a condition that satisfies the satellite number difference includes: a distance between the first satellite and the second satellite is less than a fourth distance threshold, or a distance between the first satellite and the second satellite is less than a fourth latitude threshold, where satellites in the similar ground co-track satellite chains have a same orbital altitude and a same orbital inclination angle, and have only a longitude offset between ground projected tracks.

In a possible manner, the mapping relationship indicates that an identifier of a first track segment in which the first satellite is located corresponds to an identifier of a second track segment in which the second satellite is located.

In a possible manner, the first satellite and the second satellite belong to a same ground co-track satellite chain; the first satellite and the second satellite belong to similar ground co-track satellite chains; or the first satellite and the second satellite belong to different ground co-track satellite chains, and the first satellite and the second satellite do not belong to similar ground co-track satellite chains.

In a possible manner, the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment; and the address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

In a possible manner, the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, where the reference point is any point on the first projected track, and the first projected track is a ground projected track of any ground co-track satellite chain.

In a possible manner, the processing unit 1101 is further configured to establish an inter-satellite link between the first satellite and another satellite, where the establishing an inter-satellite link between the first satellite and another satellite includes at least one of the following trigger conditions:
the inter-satellite link between the first satellite and the second satellite is faulty, a satellite address difference between the first satellite and the second satellite exceeds a value of the satellite address difference, a satellite number difference between the first satellite and the second satellite exceeds a value of the satellite number difference, and there is no mapping relationship between the track segment in which the second satellite is located and the track segment in which the first satellite is located.

In a possible manner, the processing unit 1101 is further configured to re-establish an inter-satellite link between the first satellite and the second satellite, where the re-establishing an inter-satellite link between the first satellite and the second satellite includes at least one of the following trigger conditions:
a value of the satellite address difference is changed, a value of the satellite number difference is changed, or the mapping relationship between the track segment in which the second satellite is located and the track segment in which the first satellite is located is changed.

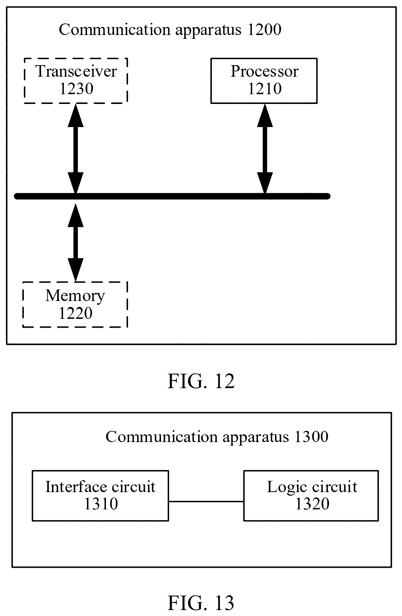

FIG. 12 shows a communication apparatus 1200 further provided in this application. The communication apparatus 1200 may be a chip or a chip system. The communication apparatus may be located in the device in any one of the foregoing method embodiments, for example, the first satellite, the network device, or the ground device, to perform an action corresponding to the device.

Optionally, the chip system may include a chip, or may include a chip and another discrete device.

The communication apparatus 1200 includes a processor 1210.

The processor 1210 is configured to execute a computer program stored in a memory 1220, to implement actions of the devices in any one of the foregoing method embodiments.

The communication apparatus 1200 may further include the memory 1220, configured to store the computer program.

Optionally, the memory 1220 is coupled to the processor 1210. The coupling is an indirect coupling or a communication connection between apparatuses, units, or modules, may be in an electrical form, a mechanical from, or another form, and is used for information exchanging between the apparatuses, the units, or the modules. Optionally, the memory 1220 and the processor 1210 are integrated together.

There may be one or more processors 1210 and one or more memories 1220. This is not limited.

Optionally, in an actual application, the communication apparatus 1200 may include or may not include a transceiver 1230. A dashed box is used as an example in the figure. The communication apparatus 1200 may exchange information with another device through the transceiver 1230. The transceiver 1230 may be a circuit, a bus, a transceiver, or any other apparatus that may be configured to exchange information.

In a possible implementation, the communication apparatus 1200 may be the first satellite or the ground device in the foregoing method embodiments.

A specific connection medium between the transceiver 1230, the processor 1210, and the memory 1220 is not limited in this embodiment of this application. In this embodiment of this application, the memory 1220, the processor 1210, and the transceiver 1230 are connected through a bus in FIG. 12. The bus is represented by using a thick line in FIG. 12. A manner of a connection between other components is merely an example for description, and is not limited thereto. The bus may be classified into an address bus, a data bus, a control bus, and the like. For ease of representation, only one bold line indicates the bus in FIG. 12, but this does not mean that there is only one bus or only one type of bus. In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In embodiments of this application, the memory may be a nonvolatile memory, such as a hard disk drive (hard disk drive, HDD) or a solid-state drive (solid-state drive, SSD), or may be a volatile memory (volatile memory), such as a random access memory (random access memory, RAM). Alternatively, the memory may be any other medium that can be configured to carry or store expected program code in a form of an instruction or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, refer to FIG. 13. An embodiment of this application further provides another communication apparatus 1300, including an interface circuit 1310 and a logic circuit 1320. The interface circuit 1310 may be understood as an input/output interface, and may be configured to perform sending and receiving steps of each device in any one of the foregoing method embodiments. The logic circuit 1320 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes the first satellite, the ground device, and the another satellite mentioned in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

Alternatively, these computer program instructions may be stored in a computer-readable memory that can instruct the computer or the another programmable data processing apparatus to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. An inter-satellite link construction method, comprising:
receiving (701), by a first satellite, an inter-satellite link creation message of a second satellite, wherein the inter-satellite link creation message comprises an address of the second satellite, and the address of the second satellite is determined based on a projection location of the second satellite on a second ground projected track; and
if the second satellite and the first satellite satisfy an inter-satellite link matching rule, creating (702), by the first satellite, an inter-satellite link between the first satellite and the second satellite, wherein the inter-satellite link matching rule is determined based on the following parameter:
the address of the second satellite.

2. The method according to claim 1, wherein the inter-satellite link matching rule comprises the following: the address of the second satellite and an address of the first satellite satisfy a satellite address difference, and there is a mapping relationship between a track segment in which the second satellite is located and a track segment in which the first satellite is located; and the address of the first satellite is determined based on a projection location of the first satellite on a first ground projected track.

3. The method according to claim 2, wherein when the first satellite and the second satellite belong to a same ground co-track satellite chain, a condition that satisfies the satellite address difference comprises: the address of the first satellite and the address of the second satellite are less than a first address threshold; and/or
when the first satellite and the second satellite belong to a same ground co-track satellite chain, and the first satellite and the second satellite belong to adjacent track circles, a condition that satisfies the satellite address difference comprises: a distance between the first satellite and the second satellite is less than a first distance threshold, or a distance between the first satellite and the second satellite is less than a first latitude threshold, wherein
the ground co-track satellite chain comprises a plurality of satellites that have a same ground projected track; and the track circle is a track segment that is of the ground projected track of the ground co-track satellite chain and that traverses a reference line twice in a same direction, and latitude of the reference line is fixed.

4. The method according to claim 2, wherein when the first satellite and the second satellite belong to similar ground co-track satellite chains, and the first satellite and the second satellite belong to closest track circles, a condition that satisfies the satellite address difference comprises: a distance between the first satellite and the second satellite is less than a third distance threshold, or a distance between the first satellite and the second satellite is less than a third latitude threshold, wherein
satellites in the similar ground co-track satellite chains have a same orbital altitude and a same orbital inclination angle, and have only a longitude offset between ground projected tracks.

5. The method according to claim 2, wherein the mapping relationship indicates that an identifier of a first track segment in which the first satellite is located corresponds to an identifier of a second track segment in which the second satellite is located.

6. The method according to claim 5, wherein the first satellite and the second satellite belong to a same ground co-track satellite chain; the first satellite and the second satellite belong to similar ground co-track satellite chains; or the first satellite and the second satellite belong to different ground co-track satellite chains, and the first satellite and the second satellite do not belong to similar ground co-track satellite chains.

7. The method according to any one of claims 1 to 6, wherein the address of the first satellite indicates a track point of the first satellite on the ground projected track or a point in a neighborhood range of the track point; or the address of the first satellite indicates a track segment of the first satellite on the ground projected track or a track segment in a neighborhood range of the track segment; and
the address of the second satellite indicates a track point of the second satellite on the ground projected track or a point in a neighborhood range of the track point; or the address of the second satellite indicates a track segment of the second satellite on the ground projected track or a track segment in a neighborhood range of the track segment.

8. The method according to any one of claims 1 to 7, wherein the inter-satellite link matching rule is comprised in the creation message, or is pre-stored in the first satellite.

9. The method according to any one of claims 1 to 8, wherein the creation message further comprises an identifier of the ground projected track of the second satellite.

10. The method according to any one of claims 1 to 9, wherein the address of the second satellite is alternatively determined based on the identifier of the second ground projected track.

11. The method according to claim 7, wherein the track point is indicated by using one of the following parameters:
a distance from a reference point moving along a first projected track to the track point, a satellite motion phase difference accumulated from the reference point moving along the first projected track to the track point, and a latitude difference accumulated from the reference point moving along the first projected track to the track point, wherein the reference point is any point on the first projected track, and the first projected track is a ground projected track of any ground co-track satellite chain.

12. The method according to any one of claims 1 to 11, wherein the method further comprises:
establishing, by the first satellite, an inter-satellite link between the first satellite and another satellite, wherein the establishing an inter-satellite link between the first satellite and another satellite comprises at least one of the following trigger conditions:
the inter-satellite link between the first satellite and the second satellite is faulty, a satellite address difference between the first satellite and the second satellite exceeds a value of the satellite address difference, a satellite number difference between the first satellite and the second satellite exceeds a value of the satellite number difference, and there is no mapping relationship between the track segment in which the second satellite is located and the track segment in which the first satellite is located.

13. A communication apparatus (1200), comprising at least one processor (1210), wherein the processor (1210) is coupled to a memory (1220); and
the at least one processor (1210) is configured to execute a computer program or instructions stored in the memory (1220), to perform the method according to any one of claims 1 to 12.

## Patentansprüche

1. Intersatellitenverbindungsaufbauverfahren, umfassend:
Empfangen (701), durch einen ersten Satelliten, einer Intersatellitenverbindungsherstellungsnachricht eines zweiten Satelliten, wobei die Intersatellitenverbindungsherstellungsnachricht eine Adresse des zweiten Satelliten umfasst und die Adresse des zweiten Satelliten basierend auf einem Projektionsort des zweiten Satelliten auf einer zweiten projizierten Bodenspur bestimmt wird; und
falls der zweite Satellit und der erste Satellit eine Intersatellitenverbindungspaarungsregel erfüllen, Herstellen (702), durch den ersten Satelliten, einer Intersatellitenverbindung zwischen dem ersten Satelliten und dem zweiten Satelliten, wobei die Intersatellitenverbindungspaarungsregel basierend auf dem folgenden Parameter bestimmt wird:
der Adresse des zweiten Satelliten.

2. Verfahren nach Anspruch 1, wobei die Intersatellitenverbindungspaarungsregel Folgendes umfasst: die Adresse des zweiten Satelliten und eine Adresse des ersten Satelliten erfüllen eine Satellitenadressendifferenz,
und es besteht eine Zuordnungsbeziehung
zwischen einem Spursegment, in dem sich der zweite Satellit befindet, und einem Spursegment, in dem sich der erste Satellit befindet; und die Adresse des ersten Satelliten wird basierend auf einem Projektionsort des ersten Satelliten auf einer ersten projizierten Bodenspur bestimmt.

3. Verfahren nach Anspruch 2, wobei, wenn der erste Satellit und der zweite Satellit zu einer gleichen Satellitenkette mit gemeinsamer Bodenspur gehören, eine Bedingung, die die Satellitenadressendifferenz erfüllt, Folgendes umfasst: die Adresse des ersten Satelliten und die Adresse des zweiten Satelliten sind kleiner als ein erster Adressschwellenwert; und/oder
wenn der erste Satellit und der zweite Satellit zu einer gleichen Satellitenkette mit gemeinsamer Bodenspur gehören und der erste Satellit und der zweite Satellit zu benachbarten Spurkreisen gehören, eine Bedingung, die die Satellitenadressendifferenz erfüllt, Folgendes umfasst: ein Abstand zwischen dem ersten Satelliten und dem zweiten Satelliten ist kleiner als ein erster Abstandsschwellenwert, oder ein Abstand zwischen dem ersten Satelliten und dem zweiten Satelliten ist kleiner als ein erster Breitengradschwellenwert, wobei
die Satellitenkette mit gemeinsamer Bodenspur mehrere Satelliten umfasst, die eine gleiche projizierte Bodenspur aufweisen; und der Spurkreis ein Spursegment ist, das zu der projizierten Bodenspur der Satellitenkette mit gemeinsamer Bodenspur gehört und das eine Referenzlinie zweimal in einer gleichen Richtung durchquert, und der Breitengrad der Referenzlinie festgelegt ist.

4. Verfahren nach Anspruch 2, wobei, wenn der erste Satellit und der zweite Satellit zu ähnlichen Satellitenketten mit gemeinsamer Bodenspur gehören und der erste Satellit und der zweite Satellit zu nächstliegenden Spurkreisen gehören, eine Bedingung, die die Satellitenadressendifferenz erfüllt, Folgendes umfasst: ein Abstand zwischen dem ersten Satelliten und dem zweiten Satelliten ist kleiner als ein dritter Abstandsschwellenwert, oder ein Abstand zwischen dem ersten Satelliten und dem zweiten Satelliten ist kleiner als ein dritter Breitengradschwellenwert, wobei
Satelliten in den ähnlichen Satellitenketten mit gemeinsamer Bodenspur eine gleiche Orbitalhöhe und einen gleichen Orbitalneigungswinkel aufweisen und nur einen Längengradversatz zwischen projizierten Bodenspuren aufweisen.

5. Verfahren nach Anspruch 2, wobei die Zuordnungsbeziehung angibt, dass eine Kennung eines ersten Spursegments, in dem sich der erste Satellit befindet, einer Kennung eines zweiten Spursegments entspricht, in dem sich der zweite Satellit befindet.

6. Verfahren nach Anspruch 5,
wobei der erste Satellit und der zweite Satellit zu einer gleichen Satellitenkette mit gemeinsamer Bodenspur gehören; der erste Satellit und der zweite Satellit zu ähnlichen Satellitenketten mit gemeinsamer Bodenspur gehören; oder der erste Satellit und der zweite Satellit zu unterschiedlichen Satellitenketten mit gemeinsamer Bodenspur gehören und der erste Satellit und der zweite Satellit nicht zu ähnlichen Satellitenketten mit gemeinsamer Bodenspur gehören.

7. Verfahren nach einem der Ansprüche 1 bis 6,
wobei die Adresse des ersten Satelliten einen Spurpunkt des ersten Satelliten auf der projizierten Bodenspur oder einen Punkt in einem Nachbarschaftsbereich des Spurpunkts angibt; oder die Adresse des ersten Satelliten ein Spursegment des ersten Satelliten auf der projizierten Bodenspur oder ein Spursegment in einem Nachbarschaftsbereich des Spursegments angibt; und
wobei die Adresse des zweiten Satelliten einen Spurpunkt des zweiten Satelliten auf der projizierten Bodenspur oder einen Punkt in einem Nachbarschaftsbereich des Spurpunkts angibt; oder die Adresse des zweiten Satelliten ein Spursegment des zweiten Satelliten auf der projizierten Bodenspur oder ein Spursegment in einem Nachbarschaftsbereich des Spursegments angibt.

8. Verfahren nach einem der Ansprüche 1 bis 7,
wobei die Intersatellitenverbindungspaarungsregel in der Herstellungsnachricht enthalten ist oder in dem ersten Satelliten vorgespeichert ist.

9. Verfahren nach einem der Ansprüche 1 bis 8,
wobei die Herstellungsnachricht ferner eine Kennung der projizierten Bodenspur des zweiten Satelliten umfasst.

10. Verfahren nach einem der Ansprüche 1 bis 9,
wobei die Adresse des zweiten Satelliten alternativ basierend auf der Kennung der zweiten projizierten Bodenspur bestimmt wird.

11. Verfahren nach Anspruch 7,
wobei der Spurpunkt unter Verwendung eines der folgenden Parameter angegeben wird:
eines Abstands von einem Referenzpunkt, der sich entlang einer ersten projizierten Spur zu dem Spurpunkt bewegt, einer Satellitenbewegungsphasendifferenz, die von dem Referenzpunkt akkumuliert wird, der sich entlang der ersten projizierten Spur zu dem Spurpunkt bewegt, und einer Breitengraddifferenz, die von dem Referenzpunkt akkumuliert wird, der sich entlang der ersten projizierten Spur zu dem Spurpunkt bewegt, wobei der Referenzpunkt ein beliebiger Punkt auf der ersten projizierten Spur ist und die erste projizierte Spur eine projizierte Bodenspur einer beliebigen Satellitenkette mit gemeinsamer Bodenspur ist.

12. Verfahren nach einem der Ansprüche 1 bis 11,
wobei das Verfahren ferner Folgendes umfasst:
Herstellen, durch den ersten Satelliten, einer Intersatellitenverbindung zwischen dem ersten Satelliten und einem anderen Satelliten, wobei das Herstellen einer Intersatellitenverbindung zwischen dem ersten Satelliten und einem anderen Satelliten mindestens eine der folgenden Auslösebedingungen umfasst:
die Intersatellitenverbindung zwischen dem ersten Satelliten und dem zweiten Satelliten ist fehlerhaft, eine Satellitenadressendifferenz zwischen dem ersten Satelliten und dem zweiten Satelliten überschreitet einen Wert der Satellitenadressendifferenz, eine Satellitennummerndifferenz zwischen dem ersten Satelliten und dem zweiten Satelliten überschreitet einen Wert der Satellitennummerndifferenz und es besteht keine Zuordnungsbeziehung zwischen dem Spursegment, in dem sich der zweite Satellit befindet, und dem Spursegment, in dem sich der erste Satellit befindet.

13. Kommunikationsvorrichtung (1200), die mindestens einen Prozessor (1210) umfasst,
wobei der Prozessor (1210) mit einem Speicher (1220) gekoppelt ist; und
wobei der mindestens eine Prozessor (1210) dazu konfiguriert ist, ein Computerprogramm oder in dem Speicher (1220) gespeicherte Anweisungen auszuführen, um das Verfahren nach einem der Ansprüche 1 bis 12 durchzuführen.

## Revendications

1. Procédé de construction de liaison inter-satellite, le procédé comprenant les étapes suivantes :
recevoir (701), par un premier satellite, un message de création de liaison inter-satellite d'un deuxième satellite, le message de création de liaison inter-satellite comprenant une adresse du deuxième satellite, et l'adresse du deuxième satellite étant déterminée sur la base d'un emplacement de projection du deuxième satellite sur une deuxième trajectoire projetée au sol ; et
si le deuxième satellite et le premier satellite satisfont une règle d'établissement de liaison inter-satellite, créer (702), par le premier satellite, une liaison inter-satellite entre le premier satellite et le deuxième satellite, la règle d'établissement de liaison inter-satellite étant déterminée à partir du paramètre suivant :
l'adresse du deuxième satellite.

2. Procédé selon la revendication 1, dans lequel la règle d'établissement de liaison inter-satellite comprend ce qui suit : l'adresse du deuxième satellite et l'adresse du premier satellite satisfont à une différence des adresses de satellites,
et il y a une relation de mise en correspondance
entre un segment de trajectoire dans lequel se trouve le deuxième satellite et un segment de trajectoire dans lequel se trouve le premier satellite ; et l'adresse du premier satellite est déterminée sur la base d'un emplacement de projection du premier satellite sur une première trajectoire projetée au sol.

3. Procédé selon la revendication 2, dans lequel, lorsque le premier satellite et le deuxième satellite appartiennent à une même chaîne de satellites à trajectoire projetée au sol commune, une condition qui satisfait à la différence des adresses de satellites comprend :
l'adresse du premier satellite et l'adresse du deuxième satellite sont inférieures à un premier seuil d'adresse ; et/ou
lorsque le premier satellite et le deuxième satellite appartiennent à une même chaîne de satellites à trajectoire projetée au sol commune, et que le premier satellite et le deuxième satellite appartiennent à des cercles de trajectoires adjacents, une condition qui vérifie la différence des adresses de satellites comprend : une distance entre le premier satellite et le deuxième satellite est inférieure à un premier seuil de distance, ou une distance entre le premier satellite et le deuxième satellite est inférieure à un premier seuil de latitude,
la chaîne de satellites à trajectoire projetée au sol commune comprenant une pluralité de satellites qui ont une même trajectoire projetée au sol ; et le cercle de trajectoire étant un segment de trajectoire qui fait partie de la trajectoire projetée au sol de la chaîne de satellites à trajectoire projetée au sol commune et qui traverse une ligne de référence deux fois dans la même direction, et la latitude de la ligne de référence est fixe.

4. Procédé selon la revendication 2, dans lequel, lorsque le premier satellite et le deuxième satellite appartiennent à des chaînes de satellites à trajectoire projetée au sol commune similaires, et que le premier satellite et le deuxième satellite appartiennent aux cercles de trajectoire les plus proches, une condition qui satisfait la différence des adresses des satellites comprend : une distance entre le premier satellite et le deuxième satellite est inférieure à un troisième seuil de distance, ou une distance entre le premier satellite et le deuxième satellite est inférieure à un troisième seuil de latitude,
les satellites des chaînes de satellites à trajectoire projetée au sol commune similaires ont une même altitude orbitale et un même angle d'inclinaison orbitale, et n'ont qu'un décalage de longitude entre les trajectoires projetées au sol.

5. Procédé selon la revendication 2, dans lequel la relation de mise en correspondance indique qu'un identifiant d'un premier segment de trajectoire dans lequel le premier satellite est situé correspond à un identifiant d'un deuxième segment de trajectoire dans lequel le deuxième satellite est situé.

6. Procédé selon la revendication 5,
dans lequel le premier satellite et le deuxième satellite appartiennent à une même chaîne de satellites à trajectoire projetée au sol commune ; le premier satellite et le deuxième satellite appartiennent à des chaînes de satellites à trajectoire projetée au sol commune similaires ; ou le premier satellite et le deuxième satellite appartiennent à des chaînes de satellites à trajectoire projetée au sol commune différentes, et le premier satellite et le deuxième satellite n'appartiennent pas à des chaînes de satellites à trajectoire projetée au sol commune similaires.

7. Procédé selon l'une quelconque des revendications 1 à 6,
dans lequel l'adresse du premier satellite indique un point de suivi du premier satellite sur la trajectoire projetée au sol ou un point dans une plage voisine du point de suivi ; ou l'adresse du premier satellite indique un segment de suivi du premier satellite sur la trajectoire projetée au sol ou un segment de suivi dans une plage voisine du segment de suivi ; et
l'adresse du deuxième satellite indique un point de suivi du deuxième satellite sur la trajectoire projetée au sol ou un point dans une plage voisine du point de suivi ; ou l'adresse du deuxième satellite indique un segment de suivi du deuxième satellite sur la trajectoire projetée au sol ou un segment de suivi dans une plage voisine du segment de suivi.

8. Procédé selon l'une quelconque des revendications 1 à 7,
dans lequel la règle d'établissement de liaison inter-satellite est comprise dans le message de création, ou est préstockée dans le premier satellite.

9. Procédé selon l'une quelconque des revendications 1 à 8,
dans lequel le message de création comprend en outre un identifiant de la trajectoire projetée au sol du deuxième satellite.

10. Procédé selon l'une quelconque des revendications 1 à 9,
dans lequel l'adresse du deuxième satellite est déterminée de manière alternative sur la base de l'identifiant de la deuxième trajectoire projetée au sol.

11. Procédé selon la revendication 7,
dans lequel le point de suivi est indiqué en utilisant l'un des paramètres suivants :
une distance entre un point de référence se déplaçant le long d'une première trajectoire projetée et le point de trajectoire, une différence de phase de mouvement du satellite accumulée à partir du point de référence se déplaçant le long de la première trajectoire projetée jusqu'au point de trajectoire, et une différence de latitude accumulée à partir du point de référence se déplaçant le long de la première trajectoire projetée jusqu'au point de trajectoire, le point de référence étant un point quelconque sur la première trajectoire projetée, et la première trajectoire projetée étant une trajectoire projetée au sol de n'importe quelle chaîne de satellites à trajectoire projetée au sol commune.

12. Procédé selon l'une quelconque des revendications 1 à 11,
le procédé comprenant en outre les étapes suivantes :
établir, par le premier satellite, une liaison inter-satellite entre le premier satellite et un autre satellite, l'établissement d'une liaison inter-satellite entre le premier satellite et un autre satellite comprenant au moins l'une des conditions de déclenchement suivantes :
la liaison inter-satellite entre le premier satellite et le deuxième satellite est défaillante, une différence des adresses des satellites entre le premier satellite et le deuxième satellite dépasse une valeur de différence d'adresses des satellites, un écart entre les numéros des satellites entre le premier satellite et le deuxième satellite dépasse une valeur de différence de numéros des satellites, et il n'existe pas de relation de mise en correspondance entre le segment de trajectoire dans lequel se trouve le deuxième satellite et le segment de trajectoire dans lequel se trouve le premier satellite.

13. Appareil de communication (1200), comprenant au moins un processeur (1210), le processeur (1210) étant couplé à une mémoire (1220) ; et
l'au moins un processeur (1210) étant configuré pour exécuter un programme informatique ou des instructions stockées dans la mémoire (1220), pour réaliser le procédé selon l'une quelconque des revendications 1 à 12.
